# EUROPÄISCHE PATENTSCHRIFT

(11) **EP 3 544 691 B1**
(45) Veröffentlichungstag und Bekanntmachung des Hinweises auf die Patenterteilung: **30.12.2020**
(21) Anmeldenummer: 17794988.0
(22) Anmeldetag: 13.11.2017
(51) Int. Cl.: A62C 2/06, F16L 5/04, H02G 3/04, H02G 3/22

(54) **INTUMESZENZ-BRANDSCHUTZVORRICHTUNG SOWIE DURCHBRUCH IN EINER WAND**
INTUMESCENCE FIRE PROTECTION DEVICE AND WALL OPENING
DISPOSITIF COUPE-FEU INTUMESCENT ET PERCÉE DANS UNE PAROI

(30) Priorität: 24.11.2016 EP 16200512
(43) Veröffentlichungstag der Anmeldung: 02.10.2019
(73) Patentinhaber: Hilti Aktiengesellschaft, 9494 Schaan (LI)
(72) Erfinder: FÖRG, Christian, 86862 Lamerdingen (DE); MÜNZENBERGER, Herbert, 65191 Wiesbaden (DE)
(74) Vertreter: Hilti Aktiengesellschaft Corporate Intellectual Property
(86) Internationale Anmeldenummer: PCT/EP2017/079012
(87) Internationale Veröffentlichungsnummer: WO 2018/095750

(56) Entgegenhaltungen:
- EP-A1- 0 506 497

## Beschreibung

Die Erfindung betrifft eine Intumeszenz-Brandschutzvorrichtung zum Verschließen von Durchbrüchen in Wänden oder Decken sowie einen Durchbruch in einer Wand oder einer Decke, mit einer Innenwand und einer an der Innenwand anliegenden Intumeszenz-Brandschutzvorrichtung.

Brandschutzwände und -decken unterliegen besonderen Vorschriften in Hinsicht auf ihre Rauchdurchlässigkeit und Feuerbeständigkeit. Jedoch müssen auch durch Brandschutzwände Leitungen, Rohre oder andere Objekte hindurchgeführt werden. Hierzu werden Durchbrüche in die Brandschutzwand eingebracht, um die Objekte durchzuführen. Durch diese Durchbrüche werden allerdings die Eigenschaften der Wand oder Decke als Brandschutzwand beeinträchtigt, sodass die Durchbrüche wieder verschlossen werden müssen.

Hierzu werden Brandschutzvorrichtungen verwendet, die ein intumeszierendes Material aufweisen und die die brennbaren Leitungen im Durchbruch umgeben. Im Falle eines Brandes brennt das Material der Leitung weg, wodurch ein unerwünschter Hohlraum entsteht. Dieser Hohlraum wird durch das Aufblähen des intumeszierenden Materials der Brandschutzvorrichtung wieder rauch- und feuerfest verschlossen. Eine solche Vorrichtung ist aus Dokument EP 0 506 497 A1 bekannt.

Die verwendeten intumeszierenden Materialien benötigen jedoch meist eine Temperatur von wenigstens ca. 200 °C, damit die Intumeszenz, also das Aufblähen des intumeszierenden Materials, in Gang gesetzt wird.

In der Regel haben die Leitungen jedoch einen Schmelzpunkt unter 200 °C, sodass die Leitungen wegbrennen oder schmelzen, noch bevor die Intumeszenz einsetzt. Die Hohlräume entstehen also, bevor die Intumeszenz in Gang gesetzt wird, und müssen dann möglichst schnell geschlossen werden.

Problematischerweise stehen bei üblichen Brandschutzvorrichtungen lediglich die Stirnseiten der Brandschutzvorrichtung in direktem Kontakt mit dem Feuer, wodurch lediglich an der Stirnseite die Intumeszenz rasch in Gang gesetzt wird. Durch das Aufblähen an der Stirnseite werden jedoch die weiteren Bereiche der Brandschutzvorrichtung gegenüber dem Feuer isoliert, sodass in diesen weiteren Bereichen die Intumeszenz viel später einsetzt.

Es ist somit Aufgabe der Erfindung, eine Intumeszenz-Brandschutzvorrichtung zum Verschließen von Durchbrüchen in Wänden oder Decken bereitzustellen, die die Hohlräume, die durch Abbrand der Leitungen entstehen, schnell und vollständig verschließen.

Die Aufgabe wird gelöst durch eine Intumeszenz-Brandschutzvorrichtung zum Verschließen von Durchbrüchen in Wänden oder Decken, mit mehreren plattenförmigen Trägern, die auf zumindest einer Seite mit einer intumeszierenden Beschichtung versehen sind, wobei die Träger in einem Überlappbereich einander teilweise überlappend so aneinander befestigt sind, dass ein Band oder Ring erhalten ist, dessen Länge größer ist als die Länge eines einzelnen Trägers, dadurch gekennzeichnet, dass die Träger mittels einer Klammer und/oder durch eine Naht aneinander befestigt sind.

Hierbei sollen unter Durchbrüchen in Wänden oder Decken auch solche Durchbrüche umfasst werden, die zur Durchführung von Rohrleitungen, insbesondere Abwasserrohren, im Untergrund dienen.

Dadurch, dass die Brandschutzvorrichtung aus mehreren überlappenden Trägern zusammengesetzt ist, ist es möglich, dass sich die Träger im Überlappbereich voneinander entfernen. Dadurch entstehen innerhalb der Brandschutzvorrichtung Kanäle für heißen Rauch und Feuer, sodass die Oberfläche vergrößert wird, die Rauch oder Feuer ausgesetzt ist. Durch diese im Vergleich zu starren, ringförmigen Brandschutzvorrichtungen größere Oberfläche kann Feuer oder heißer Rauch schneller zu einer Erwärmung der gesamten Brandschutzvorrichtung führen. Somit wird die Temperatur, bei der die Intumeszenz einsetzt, rasch erreicht. Auf diese Weise können im Hohlraum entstandene Durchbrüche schneller verschlossen werden.

Vorzugsweise sind die Träger an ihrem hinteren Längsende mit dem jeweils vorhergehenden Träger verbunden, und die Verbindung der Träger mit dem jeweils nachfolgenden Träger unterteilt die Träger derart in zwei Abschnitte, dass das vordere Längsende der Träger unbefestigt ist. In anderen Worten sind die Träger in Längsrichtung nur an einer Stelle aneinander befestigt. Dabei sind die Angaben "vorhergehend", "nachfolgend", "Längsende", etc. in Bezug auf die Längserstreckung bzw. -richtung des Bandes oder des Ringes gewählt, wenn das Band am Boden ausgebreitet bzw. der Ring abgewickelt ist. Diese Angaben dienen lediglich zur Vereinfachung der Beschreibung, denn selbstverständlich hat ein geschlossenes Band oder ein Ring keine Längsenden oder eine Reihenfolge bzw. Richtung.

Dadurch, dass die Träger an ihrem hinteren Längsende mit dem jeweils vorhergehenden Träger verbunden sind, ist das vordere Ende gegenüber den übrigen Trägern frei beweglich und kann sich somit in die durch den Abbrand der Leitung entstandenen Hohlräume hinein bewegen, wodurch die Oberfläche und das verschlossene Volumen der Brandschutzvorrichtung unmittelbar nach entstehen des Hohlraumes vergrößert wird.

Beispielsweise sind die Träger mittels einem Faden, vorzugsweise aus Polyamid-, Aramid-, Carbon-, Glas-, Keramik-, oder Stahlfaser, aneinander befestigt, wodurch eine kostengünstige und belastbare Verbindung zwischen den Trägern hergestellt wird.

In einer Ausführungsform der Erfindung ist die Beschichtung zumindest teilweise in einem Teil des Überlappbereiches zwischen den beiden überlappenden Trägern vorgesehen. Auf diese Weise führt ein Aufblähen der Beschichtung im Überlappbereich dazu, dass die Träger weiter voneinander weg bewegt werden, sodass ein sich selbst verstärkender Effekt erzielt wird.

Beispielsweise weisen die Träger mitsamt der Beschichtung wenigstens einen Einschnitt auf, der sich vom vorderen Längsende aus erstreckt. Dabei erstrecken sich die Einschnitte ebenfalls im Wesentlichen in Längsrichtung, sodass die Beweglichkeit der Träger untereinander deutlich erhöht wird.

In einer Ausführungsvariante ist, wenn die Intumeszenz-Brandschutzvorrichtung ohne Belastung ausgebreitet ist, das vordere Längsende der Träger vom jeweils nachfolgenden Träger mitsamt Beschichtung beabstandet. Dabei können die Träger konkav ausgeführt sein. Auf diese Weise werden die Träger gegeneinander vorgespannt, wenn die Intumeszenz-Brandschutzvorrichtung in einem Durchbruch zwischen der Innenwand des Durchbruches und der Leitung angeordnet ist.

Vorzugsweise sind die Träger identisch ausgeführt, wodurch die Herstellungskosten stark gesenkt werden können.

Beispielsweise haben die Träger eine rechteckige Grundfläche, wobei die längere Seite der rechteckigen Grundfläche in Längsrichtung des Bandes orientiert ist, wodurch auf einfache Weise ein Band oder ein Ring realisiert wird.

In einer Ausführungsform der Erfindung sind die Träger beidseitig mit der Beschichtung versehen, wodurch eine besonders große Oberfläche der intumeszierenden Beschichtung bereitgestellt wird.

Vorzugsweise ist die Beschichtung zumindest im Bereich des vorderen Längsendes zwischen den überlappenden Trägern vorgesehen, sodass die Träger aufgrund der Hebelwirkung effektiv beim Aufblähen der Beschichtung voneinander entfernt werden.

In einer Ausführungsvariante ist die Beschichtung vollflächig auf die Träger aufgebracht, wodurch die Herstellung der Brandschutzvorrichtung vereinfacht wird.

In einer Ausgestaltung der Erfindung sind die Träger aus einem Gewebe oder einem Gitter, insbesondere einem Glasfasergewebe oder einem Glasfasergitter hergestellt, wodurch beständige und gleichzeitig flexible Träger ermöglicht werden.

Beispielsweise weist die Intumeszenz-Brandschutzvorrichtung wenigstens einen Haken auf, mit dem die Intumeszenz-Brandschutzvorrichtung an einer Wand oder Decke befestigt werden kann, wodurch keine zusätzlichen Teile für eine Vorwandmontage notwendig sind. Dabei können die Haken aus Stahl sein.

Ferner wird die Aufgabe gelöst durch einen Durchbruch in einer Wand oder einer Decke, mit einer Innenwand und einer an der Innenwand anliegenden Intumeszenz-Brandschutzvorrichtung wie zuvor beschrieben, wobei die Längsenden der Träger, die im jeweiligen Überlappbereich radial innen liegen, gegenüber den im jeweiligen Überlappbereich radial außen liegenden Trägern beweglich sind. Auf diese Weise können sich die radial innen liegenden Längsenden der Träger ohne allzu großen Kraftaufwand in entstehende Hohlräume bewegen.

Beispielsweise sind die Längsenden der Träger, die im jeweiligen Überlappbereich radial außen liegen, am radial innen liegenden Träger befestigt, wodurch der Bewegungsumfang der freien Längsenden der Träger maximiert wird.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 eine schematische Seitenansicht einer erfindungsgemäßen Intumeszenz-Brandschutzvorrichtung,
- Figur 2 eine schematische Draufsicht der Intumeszenz-Brandschutzvorrichtung nach Figur 1,
- Figur 3a schematisch einen einzelnen Träger der Intumeszenz-Brandschutzvorrichtung nach Figur 1,
- Figur 3b eine weitere Ausführungsform eines Trägers für eine erfindungsgemäße Intumeszenz-Brandschutzvorrichtung,
- Figur 4 die Intumeszenz-Brandschutzvorrichtung nach Figur 1 ohne Belastung ausgebreitet,
- Figur 5a schematisch einen erfindungsgemäßen Durchbruch mit einer Leitung und einer erfindungsgemäßen Intumeszenz-Brandschutzvorrichtung,
- Figur 5b schematisch den Durchbruch nach Figur 5a nach einem Brand,
- Figur 6 eine schematische Seitenansicht einer zweiten Ausführungsform einer erfindungsgemäßen Intumeszenz-Brandschutzvorrichtung, und
- Figur 7 eine weitere Ausführungsform einer erfindungsgemäßen Intumeszenz-Brandschutzvorrichtung.

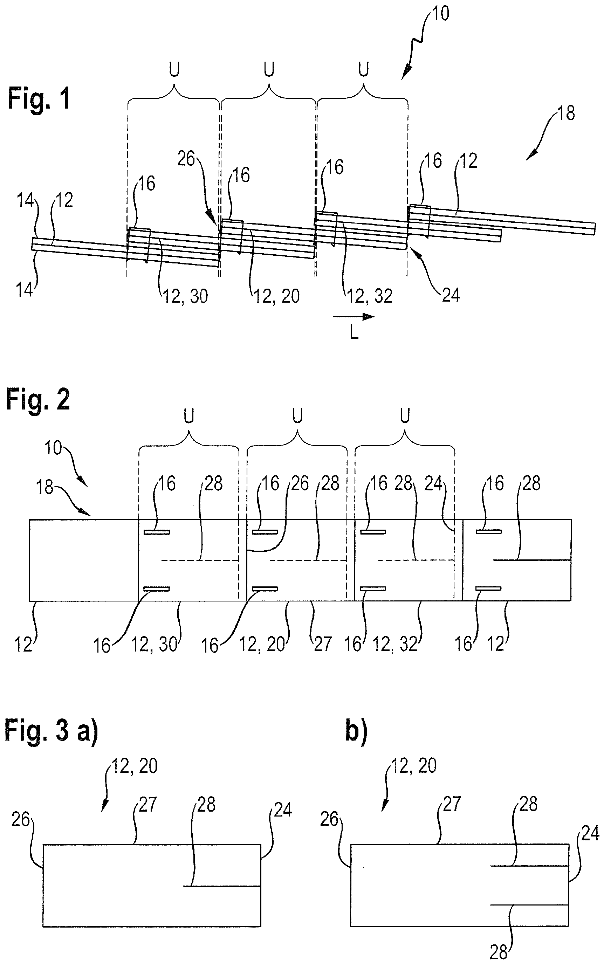

Die Figuren 1 und 2 zeigen eine Intumeszenz-Brandschutzvorrichtung 10, im Folgenden nur kurz Brandschutzvorrichtung 10 genannt, mit mehreren plattenförmigen Trägern 12, die mit einer intumeszierenden Beschichtung 14 versehen sind.

Die Träger 12 können aus einem Gewebe oder einem Gitter, insbesondere einem Glasfasergewebe oder einem Glasfasergitter hergestellt sein.

Die Beschichtung 14 ist in dieser ersten Ausführungsform vollflächig und auf beiden Seiten der Träger 12 aufgebracht, sodass jeweils der gesamte Träger 12 mit der Beschichtung 14 versehen ist.

Die Träger 12 sind überlappend angeordnet, wobei zwischen zwei Trägern 12 jeweils ein Überlappbereich U entsteht.

Im Überlappbereich U sind die Träger 12 mittels jeweils zwei Klammern 16 aneinander befestigt, wodurch ein langes Band 18 gebildet wird.

Das Band 18 hat eine Längsrichtung L, sodass auch die Träger 12 Längsenden 24, 26 aufweisen.

Die Klammern 16 sind in Längsrichtung L nur an einer Stelle vorgesehen, das heißt nicht zueinander versetzt. Selbstverständlich kann auch jeweils nur eine Klammer 16 zur Befestigung zweier Träger 12 vorgesehen sein. Die Klammern 16 können auch um 90° gedreht angeordnet sein (nicht gezeigt).

Denkbar ist auch, dass die Träger 12 durch eine Naht mit einem Faden, aus beispielweise aus Polyamid-, Aramid-, Carbon-, Glas-, Keramik-, oder Stahlfaser, aneinander befestigt sind und/oder dass der erste und der letzte Träger 12 ebenfalls miteinander verbunden sind, sodass ein Ring erhalten wird.

Zur besseren Beschreibung wird die rechte Seite in den Figuren als vordere Seite bezeichnet. Selbstverständlich hat ein Band 18 keine solche vorgegebene Richtung, jedoch kann dadurch zwischen dem vorderen Längsende 24 und dem hinteren Längsende 26 der Träger 12 unterschieden werden. Auch werden die Träger 12, die rechts von einem bestimmten Träger angeordnet sind, als "nachfolgende Träger" bezeichnet, und die Träger 12 die links von einem bestimmten Träger 12 angeordnet sind, werden als "vorhergehende Träger" bezeichnet.

Die Träger 12 sind identisch ausgeführt und identisch aneinander befestigt, sodass nun beispielhaft der Aufbau des Bandes 18 der Brandschutzvorrichtung 10 mithilfe eines mittleren Trägers 20, d.h. eines Träger 12 in der Mitte des Bandes 18, erläutert wird.

In Figur 3a ist der mittlere Träger 20 in Draufsicht dargestellt. Der mittlere Träger 20 sowie alle anderen Träger 12 weisen eine rechteckige Grundfläche auf, wobei die längere Seite 27 in Längsrichtung L des Bandes 18 orientiert ist. Vom vorderen Längsende 24 erstreckt sich in Längsrichtung L ein Einschnitt 28 in Richtung zum hinteren Längsende 26 des mittleren Trägers 20.

Denkbar ist auch, wie in Figur 3b dargestellt, dass die Träger 12 mehrere Einschnitte 28, hier zwei Einschnitte 28 aufweisen.

Wie in den Figuren 1 und 2 zu erkennen, hat der mittlere Träger 20 einen benachbarten vorhergehenden Träger 30 und einen benachbarten nachfolgenden Träger 32, sodass der mittlere Träger 20 in zwei Überlappbereichen U liegt, nämlich in einem Überlappbereich mit dem vorhergehenden Träger 30 und einem Überlappbereich mit dem nachfolgenden Träger 32.

Der mittlere Träger 20 ist an seinem hinteren Längsende 26 mit dem vorhergehenden Träger 30 durch die Klammern 16 verbunden.

Auf gleiche Weise ist der mittlere Träger 20 mit seinem nachfolgenden Träger 32 verbunden, wobei hier die Klammern 16 am hinteren Längsende des nachfolgenden Trägers 32 und damit mittig im mittleren Träger 20 vorgesehen sind. Auf diese Weise unterteilen die Klammern 16 bzw. die Verbindung der Träger 20, 32 den mittleren Träger 20 in zwei Abschnitte.

Dabei ist der vordere Abschnitt inklusive dem vorderen Längsende 24 unbefestigt, wohingegen der hintere Abschnitt mit dem vorhergehenden Träger 30 verbunden ist.

Der Einschnitt 28 des mittleren Trägers 20 erstreckt sich nahezu vollständig durch den vorderen Abschnitt des mittleren Trägers 20.

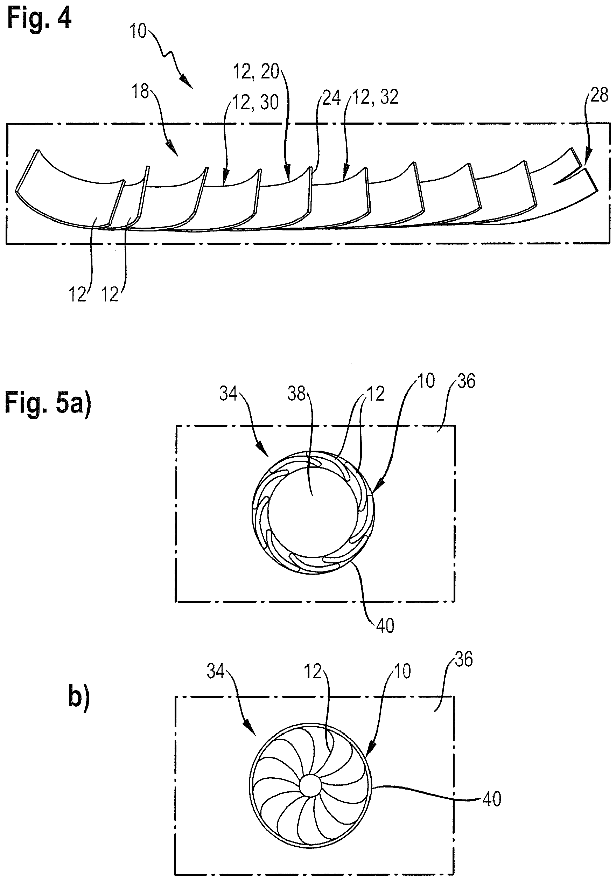

In Figur 4 ist die Brandschutzvorrichtung 10 ohne Belastung ausgebreitet dargestellt. Hier ist zu erkennen, dass die Träger 12 konkav ausgeführt sein können, sodass die vorderen Längsenden 24 beziehungsweise die vorderen Abschnitte von den nachfolgenden Trägern 32 beabstandet sind.

Dadurch, dass die Beschichtung 14 vollflächig auf die Träger 12 aufgebracht ist, ist die Beschichtung 14 in jedem der Überlappbereiche U und auch im Bereich des vorderen Längsendes 26 zwischen den überlappenden Trägern 32 und 20 vorgesehen.

In den Figuren 5a und 5b ist ein Durchbruch 34 in einer Wand 36 dargestellt, durch den eine Leitung 38 verläuft.

Die Leitung 38 füllt den Durchbruch 34 jedoch nicht vollständig aus, sodass zwischen der Leitung 38 und einer Innenwand 40 des Durchbruches 34 ein Spalt entsteht. In diesem Spalt ist die Brandschutzvorrichtung 10 angeordnet. Aus Gründen der Übersichtlichkeit sind in den Figuren 5a und 5b nur die Träger 12 der Brandschutzvorrichtung 10 und nicht auch noch die Beschichtung 14 dargestellt.

Das Band 18 der Brandschutzvorrichtung 10 umgibt die Leitung 38 vollständig, sodass das Band 18 einen Ring beschreibt.

Die Brandschutzvorrichtung 10 ist derart in den Spalt eingelegt, dass die freien, vorderen Längsenden 24 der Träger 12 radial innen liegen. Das bedeutet, dass die im jeweiligen Überlappbereich U radial innen liegenden Träger 12 gegenüber den jeweiligen radial außen liegenden Trägern 12 beweglich sind.

Ebenso sind durch diese Anordnung die Längsenden der Träger 12, die im Überlappbereich U radial außen liegen, am radial innen liegenden Träger 12 mit den Klammern 16 befestigt.

Die freien, vorderen Längsenden 24 sind dabei aufgrund der konvexen Form der Träger 12 gegen die Leitungen 38 vorgespannt.

Im Falle eines Feuers im Bereich des Durchbruches 34 schmilzt zunächst die Leitung 38 und hinterlässt an dieser Stelle einen Hohlraum im Durchbruch 34, der vollständig von der Brandschutzvorrichtung 10 umgeben ist.

Die vorderen Längsenden 24 der Träger 12 bewegen sich, sobald die Leitung 38 zerstört wurde, aufgrund ihrer Vorspannung radial nach innen. Auf diese Weise wird die Oberfläche, die mit dem durch den Hohlraum ziehenden heißen Rauch oder mit dem Feuer in Berührung kommt, vergrößert, da nun Abstände bzw. Kanäle zwischen den einzelnen Trägern 12 entstanden sind.

Erhitzen sich nun Bereiche der Beschichtung 14 soweit, dass die Intumeszenz einsetzt, so bläht die Beschichtung 14 in diesen Bereichen auf. Dabei drückt sie die freien, vorderen Längsenden 24 der Träger 12 in diesem Bereich weiter in den Hohlraum hinein und vergrößert dadurch den Abstand und die Kanäle zwischen den einzelnen Trägern 12 weiter.

Auf diese Weise wird die Oberfläche der Brandschutzvorrichtung 10 und damit die Strömung von heißem Rauch oder Feuer durch die Brandschutzvorrichtung 10 weiter vergrößert.

Somit isolieren bereits aufgeblähte Bereiche der Beschichtung 14 nicht die übrigen, inaktiven Bereiche. Vielmehr ist das Gegenteil der Fall, da Bereiche, die bereits aufgebläht sind, zu einer Vergrößerung der Abstände und Kanäle führen und somit einen besseren Wärmetransport zu den inaktiven Bereichen ermöglichen. Dieser Effekt verstärkt sich selbst, bis schließlich die gesamte Beschichtung 14 aufgebläht ist.

Wenn die gesamte Beschichtung 14 aufgebläht ist, sind alle freien Längsenden 24 der Träger 12 zur Mitte hin bewegt worden und die in Figur 5b dargestellte, blendenartige Struktur der Brandschutzvorrichtung 10 ist entstanden. Diese stellt die Volumenoptimale Verteilung der Ausgangsmasse dar.

In dieser Situation ist der gesamte Hohlraum bzw. der gesamte Durchbruch 34 durch die intumeszierte Beschichtung 14 ausgefüllt, sodass der Durchbruch 34 wieder rauch- und feuerfest verschlossen ist. Die Aschekrustenstabilität wird durch den Träger verstärkt.

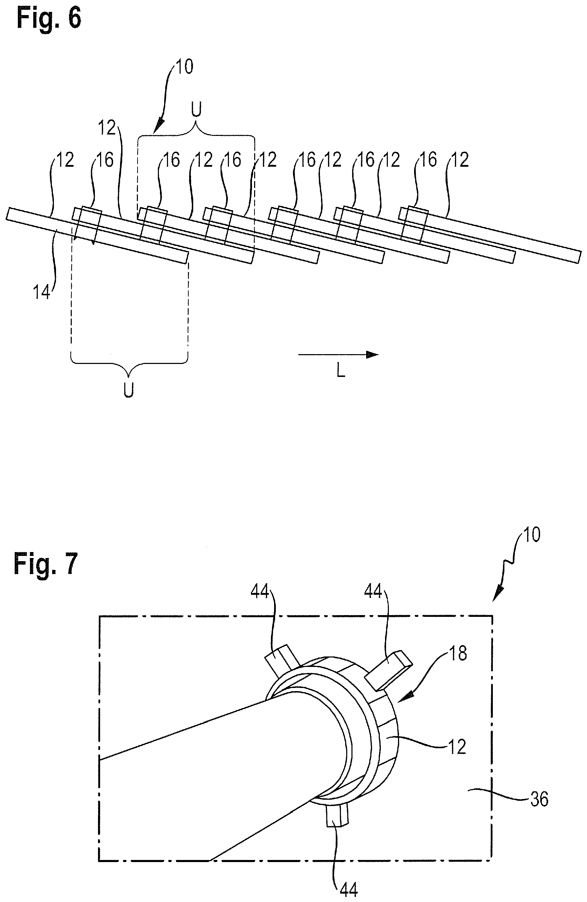

In Figur 6 ist eine zweite Ausführungsform der Brandschutzvorrichtung 10 dargestellt. Sie entspricht im Wesentlichen der ersten Ausführungsform der Brandschutzvorrichtung nach Figur 1, sodass im Folgenden nur auf die Unterschiede eingegangen wird. Gleiche und funktionsgleiche Teile sind mit denselben Bezugszeichen versehen.

Ein Unterschied zur ersten Ausführungsform liegt darin, dass die Beschichtung 14 nur einseitig auf den Trägern 12 aufgebracht ist.

Die Beschichtung 14 ist an der Seite auf den Trägern 12 aufgebracht, die im befestigten Zustand der Brandschutzvorrichtung 10 im Durchbruch 34 radial innen liegt.

Ein zweiter Unterschied besteht darin, dass das freie Ende (ca. 60%) länger ist und somit größere Durchmesser abgedeckt werden können. Vorzugsweise weist die Brandschutzvorrichtung 10 im Überlappbereich U einen Träger mit 3 Lagen auf.

In Figur 7 ist eine weitere Ausführungsform der Brandschutzvorrichtung 10 an einer Wand 36 befestigt dargestellt.

In dieser Ausführungsform sind Haken 44 am Band 18, also an einzelne Trägern 12, vorgesehen, mit denen die Brandschutzvorrichtung 10 an der Wand 36 befestigt ist. Durch diese Art der Anbringung ist es möglich, den Durchmesser des Durchbruches 34 zu kleiner zu wählen. Die Haken 44 können aus Stahl sein.

Die Brandschutzvorrichtung 10 selbst kann dabei ansonsten gemäß einer der vorhergehenden Ausführungsformen ausbildet sein.

## Patentansprüche

1. Intumeszenz-Brandschutzvorrichtung zum Verschließen von Durchbrüchen (34) in Wänden (36) oder Decken, mit mehreren plattenförmigen Trägern (12, 20, 30, 32), die auf zumindest einer Seite mit einer intumeszierenden Beschichtung (14) versehen sind, wobei die Träger (12, 20, 30, 32) in einem Überlappbereich (U) einander teilweise überlappend so aneinander befestigt sind, dass ein Band (18) oder Ring erhalten ist, dessen Länge größer ist als die Länge eines einzelnen Trägers (12, 20, 30, 32), **dadurch gekennzeichnet, dass** die Träger (12, 20, 30, 32) mittels einer Klammer (16) und/oder durch eine Naht aneinander befestigt sind.

2. Intumeszenz-Brandschutzvorrichtung nach Anspruch 1, **dadurch gekennzeichnet, dass** die Träger (12, 20) an ihrem hinteren Längsende (26) mit dem jeweils vorhergehenden Träger (12, 30) verbunden sind und dass die Verbindung der Träger (12, 20) mit dem jeweils nachfolgenden Träger (12, 32) die Träger (12, 20) derart in zwei Abschnitte unterteilt, dass das vordere Längsende (24) der Träger (12, 20) unbefestigt ist.

3. Intumeszenz-Brandschutzvorrichtung nach Anspruch 1 oder 2, **dadurch gekennzeichnet, dass** die Träger (12, 20, 30, 32) mit einem Faden, vorzugsweise aus Polyamid-, Aramid-, Carbon-, Glas-, Keramik-, oder Stahlfaser, aneinander befestigt sind.

4. Intumeszenz-Brandschutzvorrichtung nach einem der vorhergehenden Ansprüche, **dadurch gekennzeichnet, dass** die Beschichtung (14) zumindest teilweise in einem Teil des Überlappbereichs (U) zwischen den beiden überlappenden Trägern (12, 20, 30, 32) vorgesehen ist.

5. Intumeszenz-Brandschutzvorrichtung nach einem der vorhergehenden Ansprüche, **dadurch gekennzeichnet, dass** die Träger (12, 20, 30, 32) mitsamt der Beschichtung (14) wenigstens einen Einschnitt (28) aufweisen, der sich vom vorderen Längsende (24) aus erstreckt.

6. Intumeszenz-Brandschutzvorrichtung nach einem der vorhergehenden Ansprüche, **dadurch gekennzeichnet, dass**, wenn die Intumeszenz-Brandschutzvorrichtung (10) ohne Belastung ausgebreitet ist, das vordere Längsende (24) der Träger (12, 20) vom nachfolgenden Träger (12, 32) mitsamt Beschichtung (14) beabstandet sind.

7. Intumeszenz-Brandschutzvorrichtung nach einem der vorhergehenden Ansprüche, **dadurch gekennzeichnet, dass** die Träger (12, 20, 30, 32) identisch ausgeführt sind.

8. Intumeszenz-Brandschutzvorrichtung nach einem der vorhergehenden Ansprüche, **dadurch gekennzeichnet, dass** die Träger (12, 20, 30, 32) eine rechteckige Grundfläche haben, wobei die längere Seite (27) der rechteckigen Grundfläche in Längsrichtung des Bandes (18) orientiert ist.

9. Intumeszenz-Brandschutzvorrichtung nach einem der vorhergehenden Ansprüche, **dadurch gekennzeichnet, dass** die Träger (12, 20, 30, 32) beidseitig mit der Beschichtung (14) versehen sind.

10. Intumeszenz-Brandschutzvorrichtung nach einem der vorhergehenden Ansprüche, **dadurch gekennzeichnet, dass** die Beschichtung (14) zumindest im Bereich des vorderen Längsendes (24) zwischen den überlappenden Trägern (12, 20, 30, 32) vorgesehen ist.

11. Intumeszenz-Brandschutzvorrichtung nach einem der vorhergehenden Ansprüche, **dadurch gekennzeichnet, dass** die Beschichtung (14) vollflächig auf die Träger (12, 20, 30, 32) aufgebracht ist.

12. Intumeszenz-Brandschutzvorrichtung nach einem der vorhergehenden Ansprüche, **dadurch gekennzeichnet, dass** die Träger (12, 20, 30, 32) aus einem Gewebe oder einem Gitter, insbesondere einem Glasfasergewebe oder einem Glasfasergitter hergestellt sind.

13. Intumeszenz-Brandschutzvorrichtung nach einem der vorhergehenden Ansprüche, **dadurch gekennzeichnet, dass** die Intumeszenz-Brandschutzvorrichtung (10) wenigstens einen Haken (44) aufweist, mit dem die Intumeszenz-Brandschutzvorrichtung (10) an einer Wand (36) oder einer Decke befestigt werden kann.

14. Durchbruch in einer Wand (36) oder einer Decke, mit einer Innenwand (40) und einer an der Innenwand (40) anliegenden Intumeszenz-Brandschutzvorrichtung (10) gemäß einem der vorhergehenden Ansprüche, **dadurch gekennzeichnet, dass** die Längsenden (24) der Träger (12, 20, 30, 32), die im jeweiligen Überlappbereich (U) radial innen liegen, gegenüber den im jeweiligen Überlappbereich (U) radial außen liegenden Trägern (12, 20, 30, 32) beweglich sind.

15. Durchbruch nach Anspruch 14, **dadurch gekennzeichnet, dass** die Längsenden (26) der Träger (12, 32), die im jeweiligen Überlappbereich (U) radial außen liegen, am radial innen liegenden Träger (12, 20) befestigt sind.

16. Verwendung der Intumeszenz-Brandschutzvorrichtung nach einem der Ansprüche 1 bis 13 in einer Trägerstruktur, vorzugsweise ein Gehäuse.

## Claims

1. Intumescent fire protection device for closing openings (34) in walls (36) or ceilings, comprising a plurality of planar carriers (12, 20, 30, 32) of which at least one side is provided with an intumescent coating (14), the carriers (12, 20, 30, 32) being fastened to one another in an overlapping region (U), so as to partially overlap one another, such that a strip (18) or ring is obtained, the length of which is greater than the length of an individual carrier (12, 20, 30, 32), **characterized in that** the carriers (12, 20, 30, 32) are fastened to one another by means of a clamp (16) and/or by a seam.

2. Intumescent fire protection device according to claim 1, **characterized in that** the carriers (12, 20) are connected, at the rear longitudinal end (26) thereof, to the relevant preceding carrier (12, 30), and **in that** the connection of the carriers (12, 20) to the relevant subsequent carrier (12, 32) divides the carriers (12, 20) into two portions such that the front longitudinal end (24) of the carriers (12, 20) is not fastened.

3. Intumescent fire protection device according to either claim 1 or claim 2, **characterized in that** the carriers (12, 20, 30, 32) are fastened to one another by means of a thread, preferably consisting of fibers made of polyamide, aramid, carbon, glass, ceramic or steel.

4. Intumescent fire protection device according to any of the preceding claims, **characterized in that** the coating (14) is provided at least partially in a part of the overlapping region (U) between the two overlapping carriers (12, 20, 30, 32).

5. Intumescent fire protection device according to any of the preceding claims, **characterized in that** the carriers (12, 20, 30, 32) together with the coating (14) have at least one incision (28) which extends from the front longitudinal end (24).

6. Intumescent fire protection device according to any of the preceding claims, **characterized in that**, when the intumescent fire protection device (10) is spread out without loading, the front longitudinal end (24) of the carriers (12, 20) is spaced apart from the subsequent carrier (12, 32) together with the coating (14).

7. Intumescent fire protection device according to any of the preceding claims, **characterized in that** the carriers (12, 20, 30, 32) are constructed identically.

8. Intumescent fire protection device according to any of the preceding claims, **characterized in that** the carriers (12, 20, 30, 32) have a rectangular base, the longer side (27) of the rectangular base being oriented in the longitudinal direction of the strip (18).

9. Intumescent fire protection device according to any of the preceding claims, **characterized in that** both sides of the carriers (12, 20, 30, 32) are provided with the coating (14).

10. Intumescent fire protection device according to any of the preceding claims, **characterized in that** the coating (14) is provided at least in the region of the front longitudinal end (24) between the overlapping carriers (12, 20, 30, 32).

11. Intumescent fire protection device according to any of the preceding claims, **characterized in that** the coating (14) is applied over the entire surface of the carriers (12, 20, 30, 32).

12. Intumescent fire protection device according to any of the preceding claims, **characterized in that** the carriers (12, 20, 30, 32) are made from a woven fabric or a mesh, in particular a glass fiber woven fabric or a glass fiber mesh.

13. Intumescent fire protection device according to any of the preceding claims, **characterized in that** the intumescent fire protection device (10) has at least one hook (44), by means of which the intumescent fire protection device (10) can be fastened to a wall (36) or a ceiling.

14. Opening in a wall (36) or a ceiling, comprising an inner wall (40) and an intumescent fire protection device (10) according to any of the preceding claims which abuts the inner wall (40), **characterized in that** the longitudinal ends (24) of the carriers (12, 20, 30, 32) which are located radially on the inside in the relevant overlapping region (U) can be moved with respect to the carriers (12, 20, 30, 32) which are located radially on the outside in the relevant overlapping region (U).

15. Opening according to claim 14, **characterized in that** the longitudinal ends (26) of the carriers (12, 32) which are located radially on the outside in the relevant overlapping region (U) are fastened to the radially inner carrier (12, 20).

16. Use of the intumescent fire protection device according to any of claims 1 to 13 in a carrier structure, preferably a housing.

## Revendications

1. Dispositif coupe-feu intumescent destiné à fermer des passages (34) dans des parois (36) ou des couvertures, comportant plusieurs supports (12, 20, 30, 32) en forme de plaque, pourvus d'un revêtement intumescent (14) sur au moins un côté, les supports (12, 20, 30, 32) étant fixés les uns aux autres dans une zone de recouvrement (U) en se recouvrant partiellement de sorte à obtenir une bande (18) ou un anneau dont la longueur est supérieure à la longueur d'un support individuel (12, 20, 30, 32), **caractérisé en ce que** les supports (12, 20, 30, 32) sont fixés les uns aux autres au moyen d'une pince (16) et/ou d'un joint.

2. Dispositif coupe-feu intumescent selon la revendication 1, **caractérisé en ce que** les supports (12, 20) sont reliés au support précédent respectif (12, 30) au niveau de leur extrémité longitudinale arrière (26) et **en ce que** la liaison des supports (12, 20) à chaque support suivant respectif (12, 32) divise les supports (12, 20) en deux sections de telle manière que l'extrémité longitudinale avant (24) des supports (12, 20) n'est pas fixée.

3. Dispositif coupe-feu intumescent selon la revendication 1 ou 2, **caractérisé en ce que** les supports (12, 20, 30, 32) sont fixés les uns aux autres par un fil, constitué de préférence de fibres de polyamide, d'aramide, de carbone, de verre, de céramique ou d'acier.

4. Dispositif coupe-feu intumescent selon l'une des revendications précédentes, **caractérisé en ce que** le revêtement (14) est prévu au moins partiellement dans une partie de la zone de recouvrement (U) entre les deux supports (12, 20, 30, 32) se recouvrant.

5. Dispositif coupe-feu intumescent selon l'une des revendications précédentes, **caractérisé en ce que** les supports (12, 20, 30, 32), avec le revêtement (14), présentent au moins une incision (28) qui s'étend depuis l'extrémité longitudinale avant (24).

6. Dispositif coupe-feu intumescent selon l'une des revendications précédentes, **caractérisé en ce que**, lorsque le dispositif coupe-feu intumescent (10) est déployé sans charge, l'extrémité longitudinale avant (24) du support (12, 20) est espacée du support suivant (12, 32) avec le revêtement (14).

7. Dispositif coupe-feu intumescent selon l'une des revendications précédentes, **caractérisé en ce que** les supports (12, 20, 30, 32) sont conçus de manière identique.

8. Dispositif coupe-feu intumescent selon l'une des revendications précédentes, **caractérisé en ce que** les supports (12, 20, 30, 32) présentent une surface de base rectangulaire, le côté plus long (27) de la surface de base rectangulaire étant orienté dans la direction longitudinale de la bande (18).

9. Dispositif coupe-feu intumescent selon l'une des revendications précédentes, **caractérisé en ce que** les supports (12, 20, 30, 32) sont pourvus du revêtement (14) des deux côtés.

10. Dispositif coupe-feu intumescent selon l'une des revendications précédentes, **caractérisé en ce que** le revêtement (14) est prévu au moins dans la zone de l'extrémité longitudinale avant (24) entre les supports (12, 20, 30, 32) se recouvrant.

11. Dispositif coupe-feu intumescent selon l'une des revendications précédentes, **caractérisé en ce que** le revêtement (14) est appliqué sur toute la surface des supports (12, 20, 30, 32).

12. Dispositif coupe-feu intumescent selon l'une des revendications précédentes, **caractérisé en ce que** les supports (12, 20, 30, 32) sont constitués d'un tissu ou d'un treillis, en particulier d'un tissu en fibres de verre ou d'un treillis en fibres de verre.

13. Dispositif coupe-feu intumescent selon l'une des revendications précédentes, **caractérisé en ce que** le dispositif coupe-feu intumescent (10) présente au moins un crochet (44) au moyen duquel le dispositif coupe-feu intumescent (10) peut être fixé sur une paroi (36) ou une couverture.

14. Passage dans une paroi (36) ou une couverture, comportant une paroi intérieure (40) et un dispositif coupe-feu intumescent (10) reposant contre la paroi intérieure (40) selon l'une des revendications précédentes, **caractérisé en ce que** les extrémités longitudinales (24) des supports (12, 20, 30, 32), qui sont situées radialement à l'intérieur dans la zone de recouvrement respective (U), sont mobiles par rapport aux supports (12, 20, 30, 32) situés radialement à l'extérieur dans la zone de recouvrement respective (U).

15. Passage selon la revendication 14, **caractérisé en ce que** les extrémités longitudinales (26) des supports (12, 32), qui sont situées radialement à l'extérieur dans la zone de recouvrement respective (U), sont fixées aux supports (12, 20) situés radialement à l'intérieur.

16. Utilisation du dispositif coupe-feu intumescent selon l'une des revendications 1 à 13 dans une structure de supports, de préférence un boîtier.
